# EUROPÄISCHE PATENTSCHRIFT

(11) **EP 0 611 803 B1**
(45) Veröffentlichungstag und Bekanntmachung des Hinweises auf die Patenterteilung: **27.11.1996**
(21) Anmeldenummer: 94101781.6
(22) Anmeldetag: 07.02.1994
(51) Int. Cl.: C08L 25/16, C08L 29/10

(54) **Polymermischungen mit LCST-Verhalten**
Polymer blends with LCST-behaviour
Mélange de polymères de tenue LCST

(30) Priorität: 13.02.1993 DE 4304340
(43) Veröffentlichungstag der Anmeldung: 24.08.1994
(73) Patentinhaber: Röhm GmbH, 64293 Darmstadt (DE)
(72) Erfinder: Siol, Werner, Dr., D-64297 Darmstadt (DE); Terbrack, Ulrich, D-64354 Reinheim (DE)

## Beschreibung

### Gebiet der Erfindung

Die Erfindung betrifft Polymermischungen mit LCST-Verhalten, die aus Poly-α-methylstyrol einerseits und Polyvinylmethylether andererseits aufgebaut sind.

### Stand der Technik

Mischungen aus Polyvinylmethylether (PVMe) und Polystyrol gehören zu den bestuntersuchten "Polymer Blend"-Systemen. Sie werden öfter zur Illustration der physikalischchemischen Erklärungsmodelle (LCST-Verhalten) herangezogen (vgl. T. Nishi et al. Macromolecules 8, 227 (1975), Kirk-Othmer, Encyclopedia of Chemical Technology 3^{rd} Ed., Vol. 18, 443 - 447, J. Wiley, 1982, Ullmann's Encyclopedia of Industrial Chemistry 5^{th} Ed., Vol 21A, 273 - 304 VCH 1992). Allerdings gelten bis in die Gegenwart hinein mischbare (kompatible) Polymersysteme als die Ausnahme. So wird in Ullmann's Encyclopedia of Industrial Chemistry 5^{th} Ed. Vol. 20A, S. 653, VCH (1992) festgestellt: "Plastic blends are usually immiscible because the combinatorial entropy of mixing is too small (high molar masses) and the enthalpy charges on mixing are often positive. Miscibility is observed for three types of systems:
1) Chemically similar systems, e.g. polystyrene-poly(o-chlorostyrene) showing both LCST and UCST.
2) Systems having specific interactions between different components e.g. polystyrene-poly(vinyl methyl ether); these systems show only LCST's.
3) Systems consisting of oligomers, e.g. oligo(ethylene oxide)-oligo (propylene oxide); these systems possess only UCST's."

Die Existenz homogener, verträglicher Polymermischungen wird u.a. durch das Auftreten des Phänomens der "Lower Critical Solution Temperature" (LCST) nachgewiesen. Das - auch aus der Theorie abzuleitende Phänomen - besteht darin, daß die Mischbarkeit zweier nicht identischer Polymerer mit steigender Temperatur abnimmt, wobei die LCST experimentell bestimmbar ist. (vgl. O. Olabisi, L.M. Robeson & M.T. Shaw, Polymer-Polymer Miscibility, Academic Press.)
In die Untersuchung verträglicher Polymersysteme mit Polymethylvinylether als Polymerkomponente wurden auch Neutronen- und Lichtstreuungsexperimente einbezogen. (Vgl. E.W. Fischer, Mater. Res. Soc. Symp. Proc. 79, 73 - 86 (1987) Chem. Abstr. 107 (20), 176 911q.)
Mitte der 80-iger Jahre wurden technische Anwendungen des LCST-Verhaltens von verträglichen Polymermischungen vorgeschlagen. Das EP-B 0 177 063 (vgl. US-A 4 722 595) bedient sich solcher verträglicher Polymermischungen zur Aufzeichnung, Speicherung und Darstellung optisch ablesbarer Information auf einem Träger. Dabei werden optisch wahrnehmbare Übergänge von der einen in die andere Phase unter der Einwirkung thermischer Energie (oder unmittelbar in thermische Energie umwandelbarer Energieformen) genützt.

Aus der EP-B 0 181 485 (US-A 4 772 506) sind Verglasungssysteme mit temperaturgesteuerter Lichtdurchlässigkeit unter Verwendung von Kunststoffen bekannt. Die Verglasungssysteme bestehen aus einer Polymermischung gebildet aus zwei verschiedenen Polymerkomponenten bzw. enthalten diese, wobei die Mischung der Polymeren eine LCST < 150 Grad C besitzt. Dabei liegt unterhalb der LCST eine einphasige, transparente Mischung vor; oberhalb der LCST wird Entmischung zu den Polymerkomponenten beobachtet. Die Brechungsindices der Polymerkomponenten müssen voneinander abweichen.

Die europ. Patente machen ausführliche Angaben u.a. über Auswahlregeln, bevorzugte Polymerkombinationen, technische Regeln für die Anwendung usw.

Nach wie vor stehen der weiteren Erschließung der technischen Möglichkeiten, die sich beispielsweise aus den genannten europ. Patenten ergeben, die grundsätzlich Praemisse der Inkompatibilität und die Nicht-Vorhersagbarkeit des Verhaltens im Einzelfall entgegen.

Im Gegensatz zu Polystyrol erwies sich z.B. Poly-p-methylstyrol als völlig unverträglich mit Polyvinylmethylether.

### Aufgabe und Lösung

Zwar sind in den genannten europ. Patentanmeldungen verträgliche Polymersysteme konkret angegeben worden, die die dort formulierten technischen Aufgaben erfüllen. Die vielfältigen Anwendungsmöglichkeiten und die damit gekoppelten unterschiedlichen Temperaturbereiche, die als besonders günstig gelten, ließen jedoch von vorneherein erwarten, daß nicht alle Anwendungsbereiche von einer einzigen Ausführungsform optimal abgedeckt werden können. Es tritt hinzu, daß zur technischen Nutzung nicht nur das LCST-Verhalten des Polymersystems als reversibler Vorgang gehört, sondern daß die Polymeren selbst einem mehr oder weniger restriktiven Anforderungsprofil genügen sollen.

Auf dem Gebiet der thermotropen Verglasungen (EP-B 0 181 485) über die dort aufgestellten Forderungen hinaus, ebenso wie auf dem Gebiet der Aufzeichnung, Speicherung und Darstellung optisch ablesbarer Information, sind scharfe Phasenübergänge innerhalb möglichst kurzer Zeiträume sehr erwünscht. (EP-B 0177 063) Es wurde nun gefunden, daß Polymermischungen P, gebildet aus Poly-α-methylstyrol als Komponente P1 und Polyvinylmethylether als Komponente P2 ein verträgliches Polymersystem mit LCST-Verhalten darstellen, das die Anforderungen der Technik in vieler Hinsicht besonders gut erfüllt.

Besonders interessant an dem erfindungsgemäßen Polymerisat P ist der sehr scharfe Übergang von "glasklar, verträglich" nach "weiß, entmischt", der bei diesem System bei ca. 60 Grad C liegt.

Vorzugsweise stehen die Komponenten P1 und P2 in den Polymermischungen P im Verhältnis 98 : 2 bis 2 : 98 Gew.-Teilen, vorzugsweise 90 : 10 bis 10 : 90, insbesondere 80 : 20 bis 20 : 80 Gew.-Teile. Die Brechungsindices der Polymeren P1 und P2 oberhalb der LCST differieren deutlich über den zu fordernden Wert von 0,01 hinaus.

### Die Polymerkomponente P1

Die Polymerkomponente P1, das Poly-α-methylstyrol wird industriell hergestellt und ist auf dem Markt in verschiedenen Qualitäten erhältlich, die indessen nach den bisher vorliegenden Erfahrungen für die Zwecke der vorliegenden Erfindung brauchbar sind. (Vgl. Kirk-Othmer, Encyclopedia of Chemical Technology 3^{rd} Ed., Vol. 21, pg. 795 - 797, J. Wiley) α-Methylstyrol ist sehr viel weniger reaktiv als Styrol und polymerisiert erheblich langsamer.

Traditionell erhält man reines α-Methylstyrol als Nebenprodukt der Phenolherstellung (Cumol-Synthese). Die erfindungsgemäß einzusetzenden Polymeren sind zu mindestens 80 und bis zu 100 Gew.-% aus α-Methylstyrol aufgebaut; mit α-Methylstyrol copolymerisierbare Comonomere, wie z.B. Styrol, sind zulässig, soweit sie nicht mit den für das Polymersystem P zu fordernden Eigenschaften interferieren.

Das Molekulargewicht M_{w} der Polymeren P1 liegt im allgemeinen im Bereich 600 bis 200.000 Dalton (Bestimmung des Molekulargewichts mittels Gelpermeationschromatographie, vgl. H.F. Mark et al. Encyclopedia of Polymer Science & Engineering, 2^{nd} Ed. Vol. 10, 1 - 18, J. Wiley, 1987). Im Zusammenhang mit der vorliegenden Erfindung sind von besonderem Interesse relativ niedermolekulare Polymerisate des α-Methylstyrols, beispielsweise im Molekulargewichtsbereich 600 - 10.000 Dalton. Besonders interessant sind vor allem Poly-α-Methylstyrole in einem Molekulargewichtsbereich von 600 - 2000 Dalton. So sind gut brauchbare Produkte mit Molekulargewichten (bestimmt durch Dampfphasenosmometrie bei 16 Grad C) von 790 (AMOCO Resin 18 - 240) und von 960 (AMOCO Resin 18 - 290 der Amoco Comp.) kommerziell zugänglich. Im Mischungsverhalten mit der Komponente P2 zeichnet sich keine kritische Abhängigkeit vom Molekulargewicht der Komponente P1 ab.

### Die Polymerkomponente P2

Für die Herstellung der monomeren Methylvinylether stehen verschiedene Verfahren zur Verfügung (vgl. Kirk-Othmer, Encyclopedia of Chemical Technology 3^{rd} Ed. Vol. 23, pg. 937 - 959. J. Wiley, 1983, Houben-Weyl, Methoden der Organischen Chemie, 4. Aufl., Bd. E20/2, S. 1071 - 1088, Georg Thieme Verlag, 1987). Die Polymerisation kann unter dem Einfluß kationischer Initiatoren, insbesondere von Lewis-Säuren erfolgen, oder auch freiradikalisch, durch UV-Einwirkung oder thermisch. In den letztgenannten Fällen werden vorwiegend niedermolekulare Homopolymere in Form von viskosen Ölen gebildet. Auch stereoreguläre Homopolymere z.B. hergestellt mit Fe₂O₃ als Initiator in Toluol sind beschrieben (M. Hino et al. Chem. Lett. 8, 963 [1980]). Tiefe Polymerisationstemperaturen, niedrige Monomer-Konzentrationen (z.B. <10 Gew.-%) und unpolare Lösungsmittel, begünstigen eine hohe Isotaktizität der Polymerprodukte.

Im Handel erhältlich sind Polymethylvinylether, die beispielsweise als Weichmacher für Überzugsmittel und als wäßrige Tackifier eingesetzt werden mit spezifischen Viskositäten (η_{spez}) im Bereich 0,68 (z.B. Produkt ®LUTONAL M der BASF) und im Bereich 0,3 - 0,5 (z.B. Produkt ®GANTREZ M der Fa. GAF). Polyvinylether sind bekanntlich gegenüber Luftsauerstoff und Strahlung empfindlich. Es empfiehlt sich daher der Zusatz von bis zu 1 Gew.-% mindestens eines Antioxidans (vgl. Ullmann's Encyclopedia of Industrial Chemistry 5^{th} Ed., Vol. A20, pg. 459 - 507 VCH, 1992).

### Herstellung der Polymermischung P

Die Herstellung der Polymermischungen P kann in an sich bekannter Weise vorgenommen werden (vgl. Ullmann's Encyclopedia of Industrial Chemistry loc. cit. Vol. A21, pg 277 - 281, VCH 1992), wobei die spätere Anwendungsform zu berücksichtigen ist. So können die Polymermischungen P z.B. durch intensives mechanisches Vermischen der Komponenten P1 und P2 in der Schmelze, im Extruder usw. erzeugt, oder sie können auch aus einem gemeinsamen Lösungsmittel heraus als sogenannte "solution cast polyblends" hergestellt werden. (Vgl. Kirk-Othmer "Encyclopedia of Chemical Technology" 3^{rd} Ed. Vol. 18, pg. 443 - 478, J. Wiley, 1982)
Ebenso kann die Polymermischung P durch gemeinsame Ausfällung mit Fällungsmitteln erzeugt werden. Der Mischungsart sind keine Grenzen gesetzt.
Beispielsweise erfolgt die Mischung durch homogenes Mischen in der Schmelze unter Verwendung von heizbaren Mischaggregaten bei den dafür geeigneten Temperaturen, in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter).

Gerade der sehr große Unterschied in der Glastemperatur der beiden Polymeren macht eine Herstellung der Mischung aus einem gemeinsamen Lösungsmittel besonders interessant.

Durch Ausgießen aus einem gemeinsamen Lösungsmittel, wie beispielsweise Toluol, lassen sich glasklare Filme herstellen, die auch nach dem Trocknen noch völlig klar sind, aber beim Erwärmen schneeweiß werden. Diese Übergänge sind in der Regel außerordentlich scharf. Damit eignen sich die erfindungsgemäßen Polymermischungen P insbesondere als thermisch beschreibbare Lacke, beispielsweise als Bar-Code oder zur Angabe von Verfallsdaten.

Die Entmischungstemperatur der erfindungsgemäßen Polymermischungen P liegt je nach der Zusammensetzung im Bereich 60 - 100 Grad C. Sie läßt sich gegebenenfalls durch Zusatz einer dritten gewöhnlich niedermolekularen oder oligomeren Komponente W weiter absenken. Als Komponente W dienen insbesondere niedermolekulare Substanzen, z.B. Weichmacher und/oder Lösemittel.

Darüber hinaus ist auch eine Variation der Entmischungstemperatur durch Variation der Polymeren P1 und P2 durch Copolymerisation möglich. Besonders bevorzugt ist jedoch der Einsatz von Homopolymeren.

Als Weichmacher seien z.B. Ester der Phthalsäure, z.B. Dioctylphthalat, genannt. (Vgl. H. Gnamm, O. Fuchs, Lösungsmittel und Weichmachungsmittel, 8. Auflage, Bd. I & II, Wissenschaftliche Verlagsgesellschaft Stuttgart, 1980.) Im allgemeinen liegt der Gehalt an W im Bereich 0,1 bis 1000 Gew.- Teile vorzugsweise 5 - 300 Gew.-Teile, bezogen auf das Gewicht der Polymeren P1 plus P2. Wie bereits erwähnt können den erfindungsgemäßen Polymermischungen P noch an sich bekannte Stabilisatoren, UV-Absorber, Farbstoffe und Verarbeitungshilfsmittel in den dafür vorgesehenen Mengen, d.h. gewöhnlich unter 5 Gew.-% enthalten. (Vgl. Ullmann's Encyclopädie der Techn. Chemie, 4. Aufl., Bd. 15, S. 275 -280, Verlag Chemie 1978; Ullmann's Encyclopedia of Industrial Chemistry, 5^{th} Ed Vol. A20 loc. cit.) Die Handhabungs- und Anwendungsmöglichkeiten der Polymermischungen P entsprechen weitgehend den in US-A 4 722 595 bzw. US-A 4 722 506 dargestellten. Besonders interessant ist die gute Langzeitstabilität der Weißfärbung, da aufgrund der hohen Glastemperatur des Poly-α-methylstyrols P2 die in anderen Systemen zu beobachtende Reifung zu größeren Domänen mit anderem Streuverhalten nicht eintritt. Die erfindungsgemäßen Polymermischungen P können somit unmittelbar als thermisch beschriftbare Lacke eingesetzt werden.

### Vorteilhafte Wirkungen

Von besonderem Interesse erscheint der Umstand, daß die erfindungsgemäßen Polymermischungen mit einem hohen Gehalt an Poly-α-methylstyrol (z.B. >70 Gew.-% an P2) thermoreversibel entmischen. Derartige Blends zeigen bei Temperaturerhöhung über die Entmischungstemperatur hinaus einen scharfen Übergang klar, farblos nach weiß, beim Abkühlen erfolgt innerhalb weniger Minuten, allenfalls Stunden, die Auflösung der entmischten Proben zur glasklaren, verträglichen Mischung. Insbesondere Polymerischungen P mit einem kleinen Gehalt (z.B. 10 Gew.-%) an Weichmacher entmischen reversibel.

Es muß als besonders erstaunlich gelten, daß gute Umkehrbarkeit des Entmischungsvorgangs auch und gerade auf der harten und unbeweglichen Seite des Mischungsverhältnisses vorgefunden wird.

Bei Außenanwendungen der erfindungsgemäßen Polymermischungen P ist zweckmäßig für eine ausreichende Stabilisierung zu sorgen. Die Innenanwendung unterliegt dagegen kaum irgendwelchen Beschränkungen. Zu erwähnen sind z.B. thermisch aktivierte Hinweise, insbesondere Warnhinweise, beispielsweise beim Überschreiten einer vorbestimmten Temperatur, im industriellen Bereich und im Haushalt, z.B. als Hinweise auf die mit Wärmeerzeugung gekoppelte Inbetriebnahme von Installationen und Geräten. In diesem Zusammenhang sind z.B. Schriftzüge auf Backofentüren, Wärmeschränken, Saunen u.a. zu nennen.

Die folgenden Beispiele dienen zur Erläuterung der Erfindung.

### BEISPIELE

### Beispiel 1

Polyvinylmethylether (M_{w} ca. 50.000) wird in Toluol zu einer 20 %igen Lösung gelöst. Poly-α-methylstyrol (M_{W} ca. 80.000) wird in Toluol zu einer 20 %igen Lösung gelöst.

Die Polymerlösungen werden in unterschiedlichen Gewichtsverhältnissen gemischt (nach Tabelle 1) und zunächst bei Raumtemperatur unter Normaldruck und anschließend bei 30 Grad C im Vacuum (24 h) getrocknet. Die dabei erhaltenen Filme sind glasklar.

Beim Erwärmen der Filme findet man je nach Mischungsverhältnis ab ca. 70 Grad C Entmischung und damit Weißfärbung der Proben. Die Entmischungstemperaturen als Funktion der Zusammensetzung der Polymermischung P sind in Tabelle 1 angegeben.

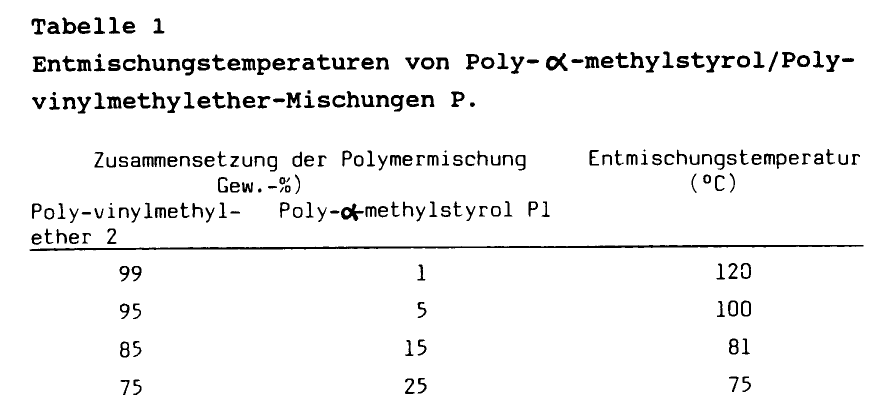

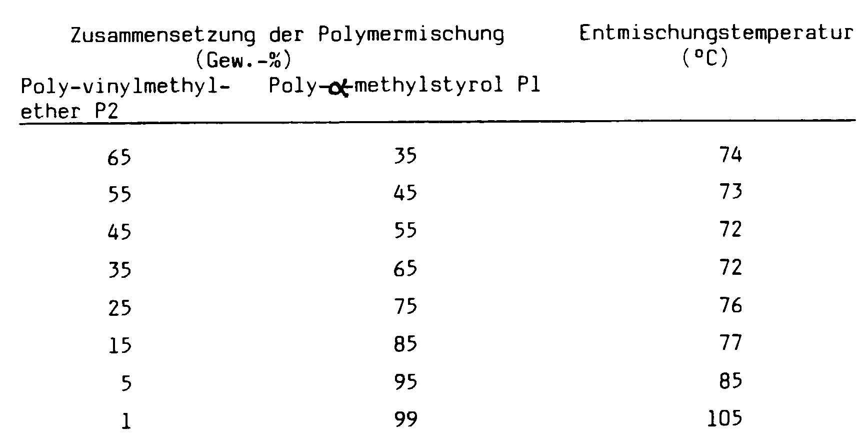

### Beispiel 2

Polyvinylmethylether (M_{W} 50.000) und Poly-α-Methylstyrol (Amoco-Resin 18 - 240, Mₙ gemäß Herstellerangabe 790 g/Mol) werden zu einer 20 %igen Lösung in Toluol gelöst.

Die Polymerlösungen werden in unterschiedlichen Gewichtsverhältnissen gemischt und zu Polymerblend-Filmen getrocknet, wie in Beispiel 1 beschrieben.

Man erhält in allen Mischungsverhältnissen glasklare Filme, die beim Erwärmen zu einer weißen Polymermischung entmischen.

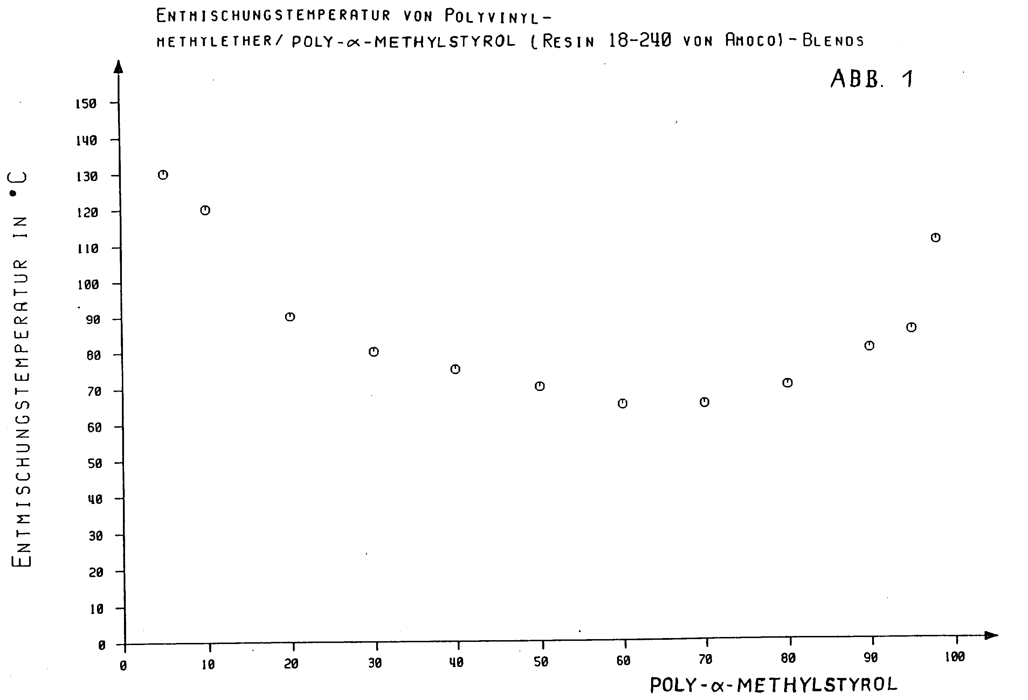

In Abb. 1 ist die Entmischungskurve der PVMe/Amoco-Resin-18-240-Mischung dargestellt. Bei langsamem Erwärmen und Abkühlen sind die Mischungen mit einem Gehalt > 80 % Amoco-Resin 18-240 umkehrbar entmischt, d.h. diese Mischungen werden beim Abkühlen wieder klar.

### Beispiel 3

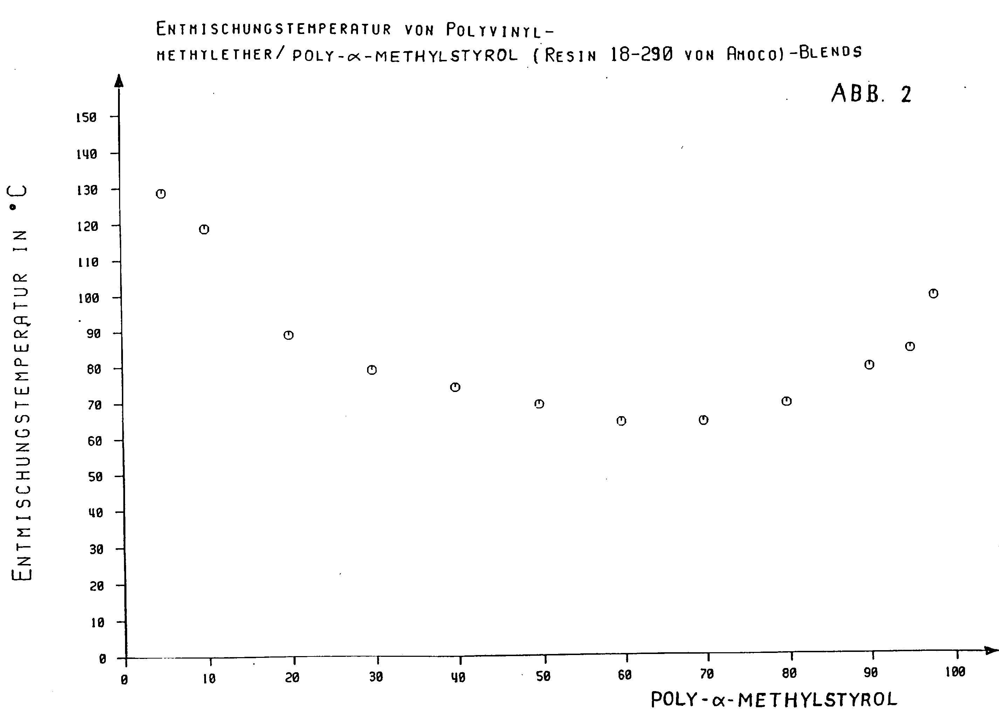

Man verfährt wie in Beispiel 2, verwendet jedoch ein anderes Poly-α-Methylstyrol (Amoco-Resin 18 - 290, Mₙ gemäß Herstellerangabe 960 g/Mol). Auch in diesem Fall erhält man nach dem Trocknen glasklare Polymerfilme. Auch diese Polymerfilme zeigen beim Erwärmen Entmischung. Die entsprechende Entmischungskurve ist in Abbildung 2 dargestellt.

### Beispiel 4

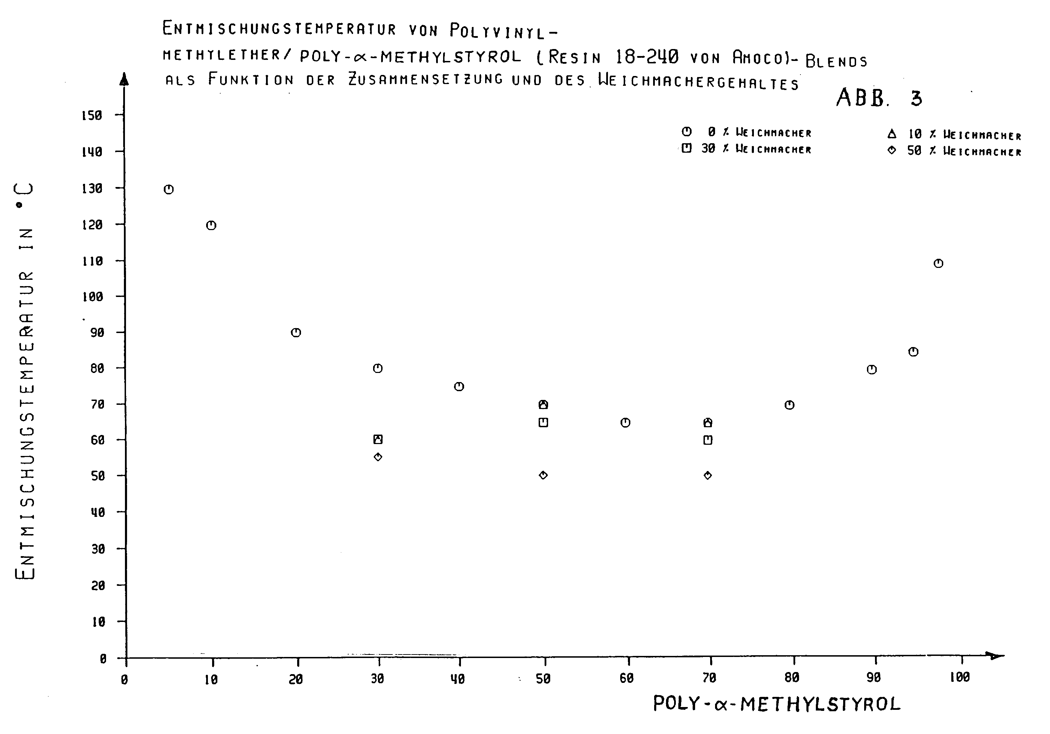

Die Polymermischungen aus 30 (50, 70) Teilen PVMe und 70 (50, 30) Teilen Poly-α-Methylstyrol (Amoco-Resin 18 - 240) werden jeweils vor dem Trocknen mit 10, 30 bzw. 50 Gew.-% Dioctylphthalat (bezogen auf die Summe PVMe und Amoco-Resin 18 - 240) versetzt. Anschließend wird wie in Beispiel 2 beschrieben, getrocknet. Man erhält glasklare Polymerfilme, die beim Erwärmen entmischen. Die Entmischungstemperaturen sind in Abbildung 3 dargestellt. Wie aus Abb. 3 zu entnehmen ist, wird durch den Zusatz von Weichmacher die Entmischungstemperatur gesenkt. Besonders die Mischungen mit einem Gehalt an 70 % Poly-α-Methylstyrol (Amoco-Resin 18 - 240) zeigen bei Weichmacherzusatz gute Umkehrbarkeit der Entmischung; diese Polymermischungen sind somit als optische Schalter gut geeignet.

## Patentansprüche

1. Polymermischungen aus zwei verschiedenen Polymerkomponenten mit LCST-Verhalten zur Anwendung bei technischen Prozessen, die eine temperaturgesteuerte Lichtdurchlässigkeit voraussetzen,
dadurch gekennzeichnet,
daß die Polymermischungen P aufgebaut sind aus Poly-α-methylstyrol als Polymerkomponente P1 und Polyvinylmethylether als Polymerkomponente P2 im Gewichtsverhältnis 98 : 2 bis 2 : 98.

2. Polymermischungen P gemäß Anspruch 1, dadurch gekennzeichnet, daß die Polymerkomponenten P1 und P2 im Gewichtsverhältnis 90 : 10 bis 10 : 90 stehen.

3. Polymermischungen P gemäß den Ansprüchen 1 und 2, dadurch gekennzeichnet, daß das Molekulargewicht der Polymerkomponente P1 im Bereich 600 bis 10.000 Dalton liegt.

4. Polymermischungen P gemäß Anspruch 3, dadurch gekennzeichnet, daß das Molekulargewicht der Polymerkomponente P1 im Bereich 600 bis 2000 Dalton liegt.

5. Polymermischungen P gemäß den Ansprüchen 1 bis 4, dadurch gekennzeichnet, daß sie noch eine niedermolekulare Komponente W in Anteilen von 0,1 bis 1000 Gew.-Teilen enthalten.

6. Polymermischungen P gemäß den Ansprüchen 1 bis 5, dadurch gekennzeichnet, daß ihre Entmischungstemperatur im Bereich 60 - 100 Grad C liegt.

## Claims

1. Polymer mixtures comprising two different polymer components with LCST behaviour for use in technical processes which require a temperature-controlled light transmissivity, characterised in that the polymer mixtures P are synthesised from poly-α-methylstyrene as polymer component P1 and polyvinyl methyl ether as polymer component P2 in a weight ratio of 98 : 2 to 2 : 98.

2. Polymer mixtures P according to Claim 1, characterised in that the polymer components P1 and P2 are in a weight ratio of 90 : 10 to 10 : 90.

3. Polymer mixtures P according to Claims 1 and 2, characterised in that the molecular weight of polymer component P1 is in the range of 600 to 10,000 Daltons.

4. Polymer mixtures P according to Claim 3, characterised in that the molecular weight of polymer component P1 is in the range of 600 to 2,000 Daltons.

5. Polymer mixtures P according to Claims 1 to 4, characterised in that they additionally comprise a low-molecular weight component W in amounts of 0.1 to 1,000 parts by weight.

6. Polymer mixtures P according to Claims 1 to 5, characterised in that their separation temperature is in the range of 60 - 100°C.

## Revendications

1. Mélanges de polymères ayant deux composants polymères différents avec un comportement LCST pour utilisation dans des procédés techniques, qui supposent une transparence fonction de la température, caractérisés en ce que, les mélanges de polymères P sont constitués de poly-α-méthylstyrène en tant que composant de polymère P₁ et de polyvinylméthyléther en tant que composant de polymère P₂ dans un rapport en poids de 98:2 à 2:98.

2. Mélanges de polymères P selon la revendications 1, caractérisés en cc que les composants polymères P₁ et P₂ sont dans un rapport en poids de 90:10 à 10:90.

3. Mélanges de polymères P selon les revendications 1 et 2, caractérisés en ce que le poids moléculaire du composant polymère P₁ se situe dans la gamme de 600 à 10,000 Dalton.

4. Mélanges de polymères P selon la revendication 3, caractérisés en ce que le poids moléculaire du composant polymère P₁ se situe dans la gamme de 600 à 2.000 Dalton.

5. Mélanges de polymères P selon les revendications 1 à 4, caractérisés en ce qu'ils contienncnt également un composant W de bas poids moléculaire dans une proportion de 0,1 à 1000 parties en poids.

6. Mélanges de polymères P selon les revendications 1 à 5, caractérisés en ce que leur température de démixtion se situe dans la gamme dc 60 à 100°C.
